(19) Europäisches Patentamt
European Patent Office
Office européen des brevets

(11) Veröffentlichungsnummer: **0 190 584**
**A2**

(12) # EUROPÄISCHE PATENTANMELDUNG

(21) Anmeldenummer: 86100584.1

(22) Anmeldetag: 17.01.86

(51) Int. Cl.⁴: C 04 B 35/10
C 07 F 7/02

(30) Priorität: 04.02.85 DE 3503668

(43) Veröffentlichungstag der Anmeldung:
13.08.86 Patentblatt 86/33

(84) Benannte Vertragsstaaten:
AT BE CH DE FR GB IT LI LU NL SE

(71) Anmelder: VEREINIGTE ALUMINIUM-WERKE AKTIENGESELLSCHAFT
Georg-von-Boeselager-Strasse 25
D-5300 Bonn 1(DE)

(72) Erfinder: Greber, Jörg Friedrich, Dr.
Lindenstrasse 2
D-8464 Wackersdorf ü./Schwandorf(DE)

(72) Erfinder: Thome, Roland, Dr.
Am alten Stadtweg
D-8412 Burglengenfeld(DE)

(74) Vertreter: Müller-Wolff, Thomas, Dipl.-Ing.
c/o Vereinigte Aluminium-Werke AG Patentabteilung
Postfach 2468
D-5300 Bonn 1(DE)

(54) **Verfahren zur Herstellung keramischer Formkörper.**

(57) Die Erfindung soll ein Verfahren zur Herstellung keramischer Formkörper hoher Härte und Isotropie unter einfachen Bedingungen erlauben. Dies wird dadurch erreicht, daß das Alpha-Aluminiumoxidmonohydrat durch Hydrolyse von Aluminiumalkoholat gewonnen wird und eine Oberfläche, gemessen in BET, von mehr als 330 bis 980 $m^2/g$ hat.

EP 0 190 584 A2

Croydon Printing Company Ltd.

# Verfahren zur Herstellung keramischer Formkörper

Die Erfindung betrifft ein Verfahren zur Herstellung keramischer Formkörper aus Alpha-Aluminiumoxidmonohydrat durch Sinterung.

Ein Verfahren der eingangs genannten Art ist aus der DE-OS 33 34 098 bekannt. Dabei wird eine Dispersion aus 2 bis 60 Gew.-% Aluminiumoxidmonohydrat geliert, getrocknet und zu geeigneten Materialien geformt. Bei der dabei angewendeten Sol-Gel-Technik werden spezielle Eigenschaften, wie beispielsweise besondere Härte und Isotropie der hergestellten Keramikformkörper erreicht.

Bei dem bekannten Verfahren werden aus einer wäßrigen Dispersion eines Alpha-Aluminiumoxidmonohydrats, wie z.B. "Dispural" durch Zugabe von 0,06 mol Salpetersäure hochreine Aluminiumoxidkörner hergestellt. Zur besseren Bewältigung des Übergangs von der Dispersion zum Gel wird in bekannter Weise die Elektrophorese verwendet, wobei ggf. durch Einwirkung starker mechanischer Scherkräfte die Gelbildung verbessert werden kann. Diese Maßnahmen sind aufwendig und führen in der Massenfertigung zu unerwünschten Inhomogenitäten bei der Gelbildung.

Aufgabe der vorliegenden Erfindung ist es daher, ein Verfahren zu entwickeln, das die Herstellung von Keramikformkörpern hoher Härte und Isotropie unter einfachen Bedingungen erlaubt. Erfindungsgemäß wird dies dadurch erreicht, daß das Alpha-Aluminiumoxidmonohydrat durch Hydrolyse von Aluminiumalkoholat gewonnen wird und eine Oberfläche, gemessen in BET, von mehr als 330 bis 980 $m^2/g$ hat.

Es hat sich gezeigt, daß bei einer Verwendung bestimmter Alpha-Aluminiumoxidmonohydrate mit einer BET-Oberfläche von mehr als 330 m²/g auf die sonst erforderliche Sol-Stufe bei der Herstellung keramischer Formkörper verzichtet werden kann. Während das handelsübliche Aluminiumoxidmonohydrat, wie beispielsweise "Dispural", Teilchen mit einer BET-Oberfläche von max. 320 m²/g aufweist, setzt die erfindungsgemäße Wirkung nachweislich erst bei BET-Oberflächen von über 330 m²/g ein. Ein besonders vorteilhafter Anwendungsbereich ergibt sich bei BET-Oberflächen von 500 m²/g bis 650 m²/g. Teilchen mit derart großer BET-Oberfläche lassen sich sehr gut dispergieren und der resultierende keramische Formkörper weist hohe mechanische Festigkeit und eine ideale Isotropie auf. Er ist frei von Spinellen und kann in einfacher Weise zu Formkörpern kalziniert werden, die sogar die Anforderungen von Schleifkörpern erfüllen.

Nach der Sinterung entsteht ein mikrokristallines Gefüge mit der Dichte eines ideal geschmolzenen Formkörpers. Gegenüber dem klassischen Verfahren zur Herstellung keramischer Formkörper aus Pulvern durch Verpressen bei hohen Drücken und anschließendem Sintern bei Temperaturen von etwa 1700°C im Vakuum oder unter Schutzgas hat das erfindungsgemäße Verfahren den Vorteil, daß das Sintern des getrockneten Gels bei Temperaturen von etwa 1450°C ohne besonders einzuhaltende aufwendige Bedingungen erfolgen kann.

Die Erfindung soll anhand der nachfolgenden Beispiele näher erläutert werden:

Beispiel 1

Aluminiumisopropylat wird hydrolisiert indem eine Mischung von Wasserdampf und Luft mit einer Temperatur von 130°C eingeleitet wird. Das Mischungsverhältnis Wasserdampf zu Luft wird auf etwa 1 : 1 eingestellt (Gewichtsteile) und das Alkoholat auf eine Temperatur von etwa 80°C gehalten. Die Geschwindigkeit der Einleitung des Wasserdampf-Luftgemisches wird so reguliert, daß die für die Hydrolyse des Alkoholats benötigte stöchiometrische Menge innerhalb einer Zeit von 3 - 8 Stunden in die Reaktionsmischung eingebracht wird, ohne daß eine Zunahme der flüssigen Phase feststellbar ist.

Das entstandene Alpha-Aluminiumoxidmonohydrat wird durch Filtration vom Alkohol abgetrennt und anschließend bei 110°C getrocknet. Das erfindungsgemäße Aluminiumoxidmonohydrat hat eine Oberfläche gemessen nach BET von 430 m²/g.

Vergleichsbeispiel 2

Ein im Handel erhältliches Aluminiumoxidhydrat (Dispural) mit einer BET-Oberfläche von 220 m²/g wird mit 0,15 mol $HNO_3$ in einer Kugelmühle 48 Stunden lang vermahlen, wobei zwischen 60 und 83% Wasser zugesetzt wird. Das bei der Vermahlung entstehende Gel wird im Vakuum entlüftet, so daß keine Gasblasen in der Masse enthalten sind. Anschließend wird das Produkt bei 60°C getrocknet, wobei die Trocknungsdauer 2 Tage beträgt.

Das nach den Beispielen 1 und 2 hergestellte feste Gel wird zerkleinert und innerhalb von 7 Stunden auf 1450°C aufgeheizt. Bei dieser Temperatur wird das Material zwei Stunden lang gebrannt und anschließend abgekühlt. Die gebrannten Formkörper gemäß Beispiel 1 sind durchscheinend weiß und haben eine Dichte, die 99% der des reinen Aluminiumoxids entspricht. Die Formkörper gemäß Beispiel 2 sind nicht weiß durchscheinend. Sie haben eine Dichte zwischen 96-98% der Dichte des reinen Aluminiumoxids. Aus den erzeugten gesinterten Produkten wurden Fiberscheiben hergestellt, deren Schleifleistung gemessen wurde.

Verglichen werden die nach Beispiel 1 und 2 hergestellten Produkte mit einem handelsüblichen hochwertigen veredelten Elektrokorund, wobei der Abtrag eines Vierkantstabes an C 45 in Gramm bei konstantem Anpreßdruck ermittelt wurde. Die nachfolgende Tabelle zeigt den Abschliff in Gramm:

| | |
|---|---|
| Erfindungsgemäße Produkt nach Beispiel 1 | 55 g |
| Vergleichsprodukt nach Beispiel 2 | 39 g |
| Geglühter Elektroschmelzkorund | 25 g |

Aus dem Vergleich folgt, daß die erfindungsgemäß hergestellten Schleifkörper überlegene Schleifeigenschaften gegenüber den Produkten haben, die mit den bisher bekannten Verfahren erzeugt wurden. Die dabei hervorstechenden Eigenschaft der Härte ist nicht nur für die Anwendung bei Schleifscheiben, sondern für fast alle Keramikformkörper von großer Wichtigkeit. Sie lassen sich auch bei anderen keramischen Formgebungsverfahren, wie z.B. beim Schlickerguß oder bei der spanenden Bearbeitung von Grünlingen nutzen, die sowohl im Zustand des Gels als auch beim Grünkörper aus getrocknetem Gel zu beliebig geformten Körpern verarbeitet werden können. Als besonders vorteilhafte Eigenschaft des erfindungsgemäß hergestellten Formkörpers lassen sich noch die niedrigen Sintertemperaturen von etwa 1450°C erwähnen, die an der unteren Grenze des durch die DE-OS 33 34 098 bekannten Bereichs von 1200 - 1700°C liegen (S. 17, 3. Abs.).

Das erfindungsgemäß gewonnene Aluminiumoxidmonohydrat wies eine maximale BET-Oberfläche von 980 $m^2/g$ auf. Bei einer weiteren Steigerung der BET-Oberfläche wurde das Dispergieren der Teilchen derart gestört, daß der resultierende keramische Formkörper keine ausreichende Festigkeit und Anisotropien aufwies.

Patentansprüche

1. Verfahren zur Herstellung keramischer Formkörper aus Alpha-Aluminiumoxidmonohydrat durch Sinterung, dadurch gekennzeichnet, daß das Alpha-Aluminiumoxidmonohydrat durch Hydrolyse von Aluminiumalkoholat gewonnen wird und eine Oberfläche, gemessen in BET, von mehr als 330 bis 980 m²/g hat.

2. Verfahren nach Anspruch 1, dadurch gekennzeichnet, daß aus dem Alpha-Aluminiumoxidmonohydrat durch Zusatz von Säure direkt ein Gel gebildet wird, das nach dem Abformen und Trocknen einen isotropen Körper bildet.

3. Verfahren nach einem der vorhergehenden Ansprüche, dadurch gekennzeichnet, daß zur Herstellung von Aluminiumoxidmonohydrat Wasserdampf und Luft mit einer Temperatur von 105 - 150°C in das Alkoholat eingeleitet wird, wobei das Mischungsverhältnis Wasserdampf zu Luft zwischen 1 : 0,1 bis 1 : 10 eingestellt wird.

4. Verfahren nach einem der vorhergehenden Ansprüche, dadurch gekennzeichnet, daß die Gelierung bei einer Temperatur von oberhalb 40°C durchgeführt wird.

5. Verfahren nach einem der vorhergehenden Ansprüche, dadurch gekennzeichnet, daß die für die Gelierung benötigte Wassermenge innerhalb einer Zeit von 0,1 bis 24 Stunden in die Reaktionsmischung eingebracht wird.